# EUROPÄISCHE PATENTANMELDUNG

(11) **EP 4 814 350 A1**
(43) Veröffentlichungstag der Anmeldung: **30.09.2026**
(21) Anmeldenummer: 25165684.9
(22) Anmeldetag: 24.03.2025
(51) Int. Cl.: F16K 11/078, F16K 35/04

(54) **EINGRIFF-MISCHVENTIL, INSBESONDERE SANITÄRES EINHEBEL-MISCHVENTIL**

(71) Anmelder: Hansgrohe SE, 77761 Schiltach (DE)
(72) Erfinder: King, Jürgen, 78730 Lauterbach (DE)
(74) Vertreter: Patentanwälte Ruff, Wilhelm, Beier, Dauster & Partner mbB

(57) **Zusammenfassung**

Die Erfindung bezieht sich auf ein hebelbetätigtes Eingriff-Mischventil, aufweisend einen Ventilgrundkörper (1), der ein Ventilgehäuse (2), in dem eine Mischkammer (3) gebildet ist, mindestens zwei Einlasskanäle und mindestens zwei Auslasskanäle (6, 7) beinhaltet, und eine Fluidsteuereinheit (8), die für eine Mischfunktion und eine Mengenregulierfunktion eingerichtet ist und ein im Ventilgehäuse beweglich angeordnetes Ventilglied (9) sowie ein Betätigungselement (10) zum Bewegen des Ventilglieds umfasst. Für die Mischfunktion ist das Ventilglied längs eines Mischbetätigungsweges zwischen einer ersten und einer zweiten Mischungsendstellung bewegbar und für die Mengenregulierfunktion längs eines Mengenbetätigungsweges zwischen einer ersten und einer zweiten Mengenendstellung.

## Beschreibung

Die Erfindung bezieht sich auf ein Eingriff-Mischventil nach dem Oberbegriff des Anspruchs 1, wie üblich vorliegend auch als gattungsgemäßes Eingriff-Mischventil bezeichnet.

Das gattungsgemäße Eingriff-Mischventil umfasst einen Ventilgrundkörper, der ein Ventilgehäuse, in dem eine Mischkammer gebildet ist, mindestens einen ersten und einen zweiten Einlasskanal zum Zuführen eines jeweiligen Fluids in die Mischkammer und mindestens einen ersten und einen zweiten Auslasskanal zum Abführen von in der Mischkammer gebildetem Mischfluid aus der Mischkammer aufweist, sowie eine Fluidsteuereinheit, die für eine Mischfunktion und eine Mengenregulierfunktion eingerichtet ist und ein im Ventilgehäuse beweglich angeordnetes Ventilglied sowie ein beweglich am Ventilgrundkörper angeordnetes Betätigungselement zum Bewegen des Ventilglieds aufweist.

Das Ventilglied ist durch das Betätigungselement für die Mischfunktion längs eines Mischbetätigungsweges zwischen einer ersten und einer zweiten Mischungsendstellung bewegbar und für die Mengenregulierfunktion längs eines Mengenbetätigungsweges zwischen einer ersten und einer zweiten Mengenendstellung bewegbar. Die Fluidsteuereinheit ist dafür eingerichtet, durch Bewegen des Ventilglieds längs des Mengenbetätigungsweges die Menge eines über den ersten Auslasskanal aus der Mischkammer abführbaren ersten Anteils an Mischfluid und die Menge eines über den zweiten Auslasskanal aus der Mischkammer abführbaren zweiten Anteils an Mischfluid variabel einzustellen. Das Betätigungselement kann z.B. ein vom Benutzer handbetätigtes oder anderweitig, z.B. motorisch oder in anderer Weise ferngesteuert, betätigtes Element sein und bewirkt die gewünschte Bewegung des Ventilglieds z.B. über eine mechanische, hydraulische, pneumatische oder magnetische Kopplung.

Eingriff-Mischventile dieser und ähnlicher Art sind in verschiedenen Ausführungen bekannt und ermöglichen es dem Benutzer, dass er durch Betätigen des Betätigungselements sowohl die Mischfunktion als auch die Mengenregulierfunktion aktivieren kann. Die Bezeichnung Eingriff-Mischventil leitet sich aus der Eigenschaft der Nutzung eines gemeinsamen Betätigungselements, wie eines Griffs oder dgl., für mehrere Ventilfunktionen ab, vorliegend speziell mindestens der Mischfunktion und der Mengenregulierfunktion, wobei die Bezeichnung Griff hier nicht auf eigentliche Griffelemente beschränkt ist, sondern generisch und stellvertretend auch andere Ausführungen des Betätigungselements einschließt. Wenn das Betätigungselement einen Betätigungshebel umfasst, werden diese Ventile üblicherweise auch als Einhebel-Mischventile bezeichnet.

Im Bereich der Sanitärtechnik werden Eingriff-Mischventile beispielsweise in Sanitärarmaturen dazu verwendet, das Mischungsverhältnis zweier zugeführter Fluide, wie kälteres Wasser und wärmeres Wasser, variabel, z.B. stufenlos, zu regulieren und das Mischfluid wahlweise an einem ersten oder einem zweiten Ventilauslass und/oder in variabel einstellbarer Menge abzugeben. Breite Verwendung finden diese Eingriff-Mischventile z.B. in sanitären Auslaufarmaturen an Waschtischen und Waschbecken in Sanitärräumen und Küchen, an Badewannen und in Duschräumen. Beim gattungsgemäßen Mischventil können die beiden Auslasskanäle beispielsweise dazu dienen, das Mischfluid zwei unterschiedlichen sanitären Verbrauchern zuzuführen, wie wahlweise einer Badewanne bzw. einem Wannenauslauf und einer Handbrause, oder das Mischfluid in variabel einstellbarer Menge einem gemeinsamen Ventilauslass zuzuführen, in den die beiden Auslasskanäle gemeinsam münden.

Der Ventilgrundkörper des Eingriff-Mischventils kann z.B. als Ventilkartusche ausgebildet sein. Die Patentschriften EP 2 302 272 B1 und EP 2 354 608 B1 der Anmelderin offenbaren sanitäre Einhebel-Mischventile mit einem derartigen Ventilkartuschenaufbau.

Die Offenlegungsschrift EP 1 965 110 A1 offenbart einen Ventilkartuschenaufbau, dort als Steuerpatrone bezeichnet, für ein Einhebel-Mischventil, das zwei Wasserzuläufe für Warm- und Kaltwasser und eine einstellbare Steuereinheit aufweist, die zur Steuerung von Menge und Mischungsverhältnis des Mischwassers diese Zuläufe variabel verschließt oder mit wenigstens einem Wasserauslass in Verbindung bringt, wobei im oder am Wasserauslass ein den Wasserdurchfluss begrenzendes Bauteil angeordnet ist.

Es können auch mehrere Wasserauslässe beispielsweise für eine Wanne und eine Brause vorgesehen sein.

Die Gebrauchsmusterschrift CN 215445174 U offenbart ein sanitäres Eingriff-Mischventil mit zwei Einlasskanälen für Kalt- und Warmwasser, die zu einer Mischkammer führen, und mit zwei Auslasskanälen zum Abführen von in der Mischkammer gebildetem Mischfluid. Dabei ist ein erster Auslasskanal unabhängig von der Stellung einer die Mischfunktion und die Mengenregulierfunktion bewirkenden Fluidsteuereinheit ständig mit der Mischkammer verbunden, während der andere Auslasskanal durch Betätigen der Fluidsteuereinheit geöffnet oder abgesperrt werden kann.

Gattungsgemäße und ähnliche Eingriff-Mischventile sind auch in den Offenlegungsschriften US 2007/0044850 A1 und US 2014/0116549 A1 sowie den Gebrauchsmusterschriften CN 214838579 U und CN 203670896 U offenbart.

Der Erfindung liegt als technisches Problem die Bereitstellung eines Eingriff-Mischventils der eingangs genannten Art zugrunde, das gegenüber dem oben erwähnten Stand der Technik weitergehende Vorteile bietet, insbesondere im Hinblick auf seine Ventilfunktionalitäten.

Die Erfindung löst dieses Problem durch die Bereitstellung eines Eingriff-Mischventils mit den Merkmalen des Anspruchs 1. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Gemäß einem ersten Aspekt der Erfindung ist die erste Mengenendstellung eine Minimalmengenstellung, und die zweite Mengenendstellung ist eine Maximalmengenstellung. Unter Minimalmengenstellung ist dabei eine Stellung des Ventilglieds und damit der Fluidsteuereinheit zu verstehen, bei der die Menge an über den ersten und den zweiten Fluidauslass abführbarem und dadurch vom Ventil abgebbarem Mischfluid minimal ist. Insbesondere kann es sich dabei um eine Geschlossenstellung des Ventils handeln, in der kein Mischfluid abgegeben wird, alternativ um eine Stellung, in der noch eine geringe Menge an Mischfluid abgegeben wird, die kleiner ist als die Menge an Mischfluid, das in anderen Ventilstellungen abgegeben wird. Analog bezeichnet die Maximalmengenstellung eine Stellung des Ventilglieds und damit der Fluidsteuereinheit, in der das Ventil eine maximale Menge an Mischfluid abgeben kann, d.h. eine Fluidmenge, die größer ist als in den anderen Ventilstellungen. Hierbei kann es sich insbesondere um eine vollständig offene Ventilstellung handeln, auch als Volloffenstellung bezeichnet.

Der Mengenbetätigungsweg weist bei diesem ersten Aspekt der Erfindung eine Rastzwischenstellung zwischen der ersten und der zweiten Mengenendstellung auf, wobei ein Abschnitt des Mengenbetätigungsweges zwischen der Minimalmengenstellung und der Rastzwischenstellung zur Änderung der Menge an über den ersten Auslasskanal abführbarem Mischfluid eingerichtet ist und/oder ein Abschnitt des Mengenbetätigungsweges zwischen der Rastzwischenstellung und der Maximalmengenstellung zur Änderung der Menge an über den zweiten Auslasskanal abführbarem Mischfluid eingerichtet ist. Bei dieser Mengenänderung in Abhängigkeit vom Mengenbetätigungsweg kann es sich jeweils je nach Bedarf und Anwendungsfall z.B. um einen zumindest stückweise kontinuierlich, d.h. stetig bzw. graduell, zunehmenden oder abnehmenden Änderungsverlauf und/oder um einen Änderungsverlauf mit einer oder mehreren Stufen, d.h. sprungartigen Änderungsstellen, handeln. Des Weiteren kann je nach Bedarf und Anwendungsfall vorgesehen sein, dass sich in einem entsprechenden Abschnitt des Mengenbetätigungsweges zwischen der Minimalmengenstellung und der Rastzwischenstellung und/oder in einem entsprechenden Abschnitt des Mengenbetätigungsweges zwischen der Rastzwischenstellung und der Maximalmengenstellung gleichzeitig sowohl die Menge an über den ersten Auslasskanal abführbarem Mischfluid als auch die Menge an über den zweiten Auslasskanal abführbarem Mischfluid veränderlich einstellen lassen, z.B. gleichsinnig, d.h. beide Mengen zunehmend oder abnehmend, oder gegensinnig, d.h. die eine Menge zunehmend, die andere Menge abnehmend.

Die Rastzwischenstellung bezeichnet eine Stellung des Ventilglieds bzw. des Betätigungselements, die sich jeweils mit Abstand zur Minimalmengenstellung und zur Maximalmengenstellung zwischen diesen befindet und durch eine Rastung definiert ist. Die Rastung kann beispielsweise zwischen dem Betätigungselement und/oder dem Ventilglied einerseits und einem angrenzenden Bereich des Ventilgrundkörpers andererseits definiert sein und ermöglicht dem Benutzer eine haptische Rückmeldung, dass die besagte Zwischenstellung erreicht ist. Da es sich um eine Zwischenstellung handelt, bedeutet dies, dass die Rastung durch eine entsprechende, gegebenenfalls leicht erhöhte, ausrastende Betätigungskraft überwunden werden kann. Entsprechende Rastungen sind dem Fachmann bekannt und bedürfen daher hier keiner näheren Erläuterungen, siehe beispielsweise die oben erwähnten Patentschriften EP 2 302 272 B1 und EP 2 354 608 B1 der Anmelderin.

In den Ausführungen, in denen der betreffende Abschnitt des Mengenbetätigungswegs zwischen der Minimalmengenstellung und der Rastzwischenstellung zur Mengenänderung des ersten Mischfluidanteils eingerichtet ist, lässt sich die Menge an über den ersten Auslasskanal abgebbarem Mischfluid entsprechend variabel einstellen, beispielsweise kontinuierlich oder stufig erhöhen oder alternativ zunächst erhöhen und dann wieder verringern. Je nach Bedarf und Anwendungsfall erstreckt sich dieser Abschnitt des Mengenbetätigungswegs über den gesamten Bereich von der Minimalmengenstellung bis zur Rastzwischenstellung oder nur über einen Teilbereich desselben.

In den Ausführungen, in denen der betreffende Abschnitt des Mengenbetätigungswegs zwischen der Rastzwischenstellung und der Maximalmengenstellung zur Änderung der Menge des zweiten Mischfluidanteils eingerichtet ist, lässt sich die Menge an über den zweiten Auslasskanal abgebbarem Mischfluid entsprechend variabel einstellen, beispielsweise kontinuierlich oder stufig erhöhen oder alternativ zunächst erhöhen und dann wieder verringern. Je nach Bedarf und Anwendungsfall erstreckt sich dieser Abschnitt des Mengenbetätigungswegs über den gesamten Bereich von der Rastzwischenstellung bis zur Maximalmengenstellung oder nur über einen Teilbereich desselben.

In entsprechenden Ausführungen kann die Rastzwischenstellung beispielsweise eine Stellung des Ventilglieds bzw. des Betätigungselements definieren, in der bei Ventilbetätigung in Richtung von der Minimalmengenstellung zur Maximalmengenstellung die Menge an über den ersten Auslasskanal abgebbarem Mischfluid nicht mehr weiter steigt oder sich z.B. bis auf null verringert und/oder ab der bei Ventilbetätigung in Richtung von der Minimalmengenstellung zur Maximalmengenstellung das Abgeben des Mischfluids auch oder nur über den zweiten Auslasskanal einsetzt.

Des Weiteren ist bei diesem Aspekt der Erfindung vorteilhaft, dass sowohl die Minimalmengenstellung als auch die Maximalmengenstellung des Ventils jeweils durch eine Endstellung definiert sind, vorliegend speziell eine Endstellung des Mengenbetätigungswegs des Ventilglieds bzw. des Betätigungselements. Dies stellt für den Benutzer eine gewünschte haptische Rückmeldung dar, dass sich das Ventil in der am meisten geschlossenen bzw. am meisten geöffneten Stellung befindet, und verhindert ein versehentliches Überfahren dieser Stellungen beim Betätigen des Ventilglieds bzw. des Betätigungselements längs des Mengenbetätigungswegs.

Gemäß einem zweiten Aspekt der Erfindung, der zusätzlich oder alternativ zum ersten Aspekt vorgesehen sein kann, ist ein erstes Mengenreglerelement im ersten Auslasskanal und/oder ein zweites Mengenreglerelement im zweiten Auslasskanal angeordnet.

Dieser Aspekt der Erfindung ermöglicht es, die über den ersten Auslasskanal bzw. über den zweiten Auslasskanal abgebbare Mischfluidmenge unabhängig von der Mengeneinstellung durch das Ventilglied bzw. durch die Fluidsteuereinheit auf einen jeweils gewünschten Mengenwert zu regulieren, insbesondere auf einen vorgebbaren Maximalwert zu beschränken, der nicht überschritten werden soll, um damit einhergehende unerwünschte Effekte zu vermeiden. Derartige Mengenreglerelemente, mit denen sich die Fluiddurchflussmenge gezielt regulieren und insbesondere auf einen Maximalwert begrenzen lässt, einschließlich sogenannter einschlägiger Strömungsdrosseln, sind dem Fachmann an sich bekannt und bedürfen daher hier keiner näheren Erläuterungen.

Das jeweilige Mengenreglerelement kann hierbei an einer grundsätzlich beliebigen, für den jeweiligen Anwendungsfall am besten geeigneten Stelle im Verlauf des betreffenden Auslasskanals von der Mischkammer bis zu einem zugehörigen Ventilauslass angeordnet sein, z.B. direkt nach der Mischkammer oder direkt am Ventilauslass oder mit Abstand sowohl zur Mischkammer als auch zum Ventilauslass.

Mit jedem der beiden genannten Erfindungsaspekte lässt sich die Funktionalität des Mischventils insbesondere im Hinblick auf ein relativ genaues Einstellen vergleichsweise geringer abzugebender Mischfluidmengen optimieren. Herkömmliche Fluidsteuereinheiten mit beweglichem Ventilglied, wie einer beweglichen Steuerscheibe, erlauben häufig kein sehr genaues Einstellen und Beibehalten einer relativ geringen abzugebenden Mischfluidmenge, wie dies beispielsweise im Sanitärbereich aus Wasserspargründen oft gewünscht ist. Hier schafft das erfindungsgemäße Mischventil Abhilfe, indem es ein vergleichsweise genaues, feinfühliges Einstellen und Beibehalten auch solcher geringerer Mengen an abzugebendem Mischfluid ermöglicht. Dazu kann zum einen die Maßnahme beitragen, den Mengenbetätigungsweg des Ventilglied so auszulegen, dass die Minimalmengenstellung und die Maximalmengenstellung entgegengesetzte Betätigungsendstellungen bilden und sich dazwischen die Rastzwischenstellung befindet und dass auf einer Seite der Rastzwischenstellung zumindest die Menge an über den ersten Auslasskanal abführbarem Mischfluid variabel eingestellt werden kann und/oder auf der anderen Seite der Rastzwischenstellung zumindest die Menge an über den zweiten Auslasskanal abführbarem Mischfluid variabel eingestellt werden kann. Zum anderen kann dazu die Maßnahme beitragen, im ersten Auslasskanal und/oder im zweiten Auslasskanal ein jeweiliges Mengenreglerelement anzuordnen.

Die erwähnte spezielle Konfigurierung des Mengenbetätigungswegs erleichtert ein genaues, feinfühliges Einstellen von über den ersten Auslasskanal und/oder den zweiten Auslasskanal aus der Mischkammer abführbarem Mischfluid. Analog lässt sich durch das Anordnen des oder der Mengenreglerelemente die über den betreffenden Auslasskanal abführbare Mischfluidmenge unabhängig von und zusätzlich zur mengenregulierenden Wirkung der Fluidsteuereinheit bzw. des Ventilglieds in einer gewünschten Weise gezielt einstellen, z.B. auf einen gewünschten maximalen Mengenwert begrenzen.

Bei jedem der beiden Erfindungsaspekte kann das über den ersten und den zweiten Auslasskanal aus der Mischkammer abführbare Mischfluid je nach Bedarf und Anwendungsfall an einen gemeinsamen Fluidauslass des Mischventils oder an zwei separate Auslässe des Mischventils weitergeleitet werden. Im erstgenannten Fall kann die vom Ventil an diesem gemeinsamen Fluidauslass abgebbare Fluidmenge über einen vergleichsweise großen Mengenbereich hinweg besonders feinfühlig reguliert werden, auch schon im Bereich relativ geringer Fluidabgabemengen, im letztgenannten Fall kann das Mischfluid über die getrennten Ventilauslässe individuell zwei verschiedenen Fluidverbrauchern in fein regulierbarer Menge zugeführt werden, z.B. in einem sanitären Anwendungsfall einem Badewannenauslauf und einer wannenseitigen Handbrause.

In verschiedenen Weiterbildungen der Erfindung ist/sind das erste und/oder das zweite Mengenreglerelement abnehmbar am Ventilgrundkörper angebracht oder integraler Bestandteil des Ventilgrundkörpers. Alle diese Weiterbildungen haben den Vorteil, dass das betreffende Mengenreglerelement eine Komponente des Mischventils bildet und somit die betreffende Mengenreglerfunktion bereits in das Mischventil integriert ist, wodurch sich ein anderweitiges Anordnen eines solchen Mengenreglerelements stromabwärts vom Mischventil vor oder in einer dem Mischventil nachgelagerten Komponente eines Mischfluidverbrauchers, d.h. eines das Mischfluid nutzenden Systems, erübrigt. In der abnehmbaren Variante kann das Mengenreglerelement im Austausch- oder Wartungsfall relativ einfach vom Ventilgrundkörper abgenommen und ausgetauscht oder gewartet und wieder angebracht werden, ohne dass hierfür der Ventilgrundkörper grundlegend auseinandergebaut werden muss, soweit überhaupt möglich. Vorzugsweise ist das Mengenreglerelement hierbei zum Abnehmen von außen zugänglich am Ventilgrundkörper angebracht, z.B. lösbar an- oder eingesteckt oder an- oder eingeschraubt. In der integralen Variante kann das Mengenreglerelement integral mit dem Ventilgrundkörper gefertigt und/oder platzsparend und optisch verdeckt im Inneren des Ventilgrundkörpers eingebaut bzw. gebildet sein. Je nach Bedarf und Anwendungsfall kann jeder der beiden Auslasskanäle mit einem zugehörigen Mengenreglerelement bestückt sein, oder nur einer von beiden. In alternativen Ausführungen werden beide Auslasskanäle ohne Mengenreglerelement belassen.

In einer Weiterbildung der Erfindung münden der erste und der zweite Auslasskanal zu einem gemeinsamen Ventilauslass aus dem Ventilgrundkörper oder führen getrennt zu je einem zugeordneten Ventilauslass. Diese Varianten der Auslasskanalführung können je nach Bedarf und Anwendungsfall realisiert sein und zugehörige Vorteile bieten, wie bereits oben angesprochen. Im einen Fall lässt sich die am gemeinsamen Ventilauslass bereitgestellte Mischfluidmenge sehr feinfühlig und/oder genau einstellen, indem beide Auslasskanäle zur Einstellung dieser Mischfluidmenge beitragen. Im anderen Fall kann das Mischfluid gezielt je einem von zwei getrennten Ventilauslässen zugeführt und jeweils in seiner Fluidmenge individuell für den betreffenden Ventilauslass eingestellt werden.

**In** einer Weiterbildung der Erfindung sperrt das Ventilglied den ersten und den zweiten Einlasskanal in der Minimalmengenstellung ab und öffnet diese beiden Einlasskanäle beim Bewegen längs des Mengenbetätigungsweges bis zur Maximalmengenstellung zunehmend, wobei es in einem an die Minimalmengenstellung angrenzenden Abschnitt des Mengenbetätigungsweges den ersten Auslasskanal öffnet und den zweiten Auslasskanal absperrt und in einem an die Maximalmengenstellung angrenzenden Abschnitt des Mengenbetätigungsweges den ersten Auslasskanal absperrt und den zweiten Auslasskanal öffnet. Bei dieser Maßnahme bildet die Minimalmengenstellung folglich eine Geschlossenstellung des Ventils, und zwar speziell dadurch, dass das Ventilglied die Einlasskanäle absperrt, wobei unter Absperren vorliegend ein vollständiges Schließen bzw. Geschlossenhalten zu verstehen ist.

Diese Ventilausführung erweist sich für zahlreiche Anwendungen als vorteilhaft. Die beiden Endstellungen des Mengenbetätigungswegs sind als Geschlossenstellung bzw. Volloffenstellung realisiert, wodurch sich jede gewünschte Mischfluidmenge bis zur maximal möglichen Menge einstellen lässt. Dabei wird zunächst die Mischfluidabgabe über den ersten Auslasskanal freigegeben, während der zweite Auslasskanal noch abgesperrt bleibt. Dies kann dazu genutzt werden, über den ersten Auslasskanal eine relativ geringe Mischfluidmenge einzustellen. Bei Bedarf kann dies durch Anordnen eines dafür passenden Mengenreglerelements im ersten Auslasskanal unterstützt werden. Bei Annäherung an die Volloffenstellung wird der erste Auslasskanal abgesperrt, während der zweite Auslasskanal offen ist, so dass über den zweiten Auslasskanal gezielt eine größere Mischfluidmenge bereitgestellt werden kann. Auch dies kann bei Bedarf wiederum vom Anordnen eines passenden Mengenreglerelements im zweiten Auslasskanal unterstützt werden. **In** alternativen Ausführungen ist die Mengeneinstellung durch das Ventilglied andersartig realisiert. So kann in entsprechenden Ausführungen eine reine Umstellfunktion realisiert sein, bei der es an einer Geschlossenstellung fehlt und zwischen einer Mischfluidabgabe über den ersten Auslasskanal und einer Mischfluidabgabe über den zweiten Auslasskanal umgestellt werden kann, je nach Bedarf ohne oder mit einem überlappenden Einstellbereich, in welchem das Mischfluid über beide Auslasskanäle abgegeben wird.

**In** einer Weiterbildung der Erfindung führt das Ventilglied längs des Mischbetätigungsweges eine Drehbewegung aus und längs des Mengenbetätigungsweges eine Translationsbewegung. Dies stellt eine vorteilhafte Bewegungskinematik für das Ventilglied dar, wie es grundsätzlich z.B. von sanitären Einhebel-Mischventilen an sich bekannt ist. Alternativ kann eine andere Bewegungskinematik für das Ventilglied vorgesehen sein, z.B. je eine Drehbewegung sowohl für den Mischbetätigungsweg als auch für den Mengenbetätigungsweg in unterschiedlichen Drehrichtungen oder um unterschiedlich orientierte Drehachsen.

In einer Ausgestaltung der Erfindung ist das Ventilglied von einer beweglichen Steuerscheibe gebildet, die um eine Scheibenlängsachse drehbeweglich und in einer zur Scheibenlängsachse senkrechten Translationsrichtung translationsbeweglich gegen eine Verteilerfläche des Ventilgrundkörpers anliegt, wobei die Verteilerfläche jeweils mindestens eine Einlass-Durchgangsöffnung für den ersten und den zweiten Einlasskanal sowie jeweils mindestens eine Auslass-Durchgangsöffnung für den ersten und den zweiten Auslasskanal aufweist und die Steuerscheibe mindestens eine mit den Einlass-Durchgangsöffnungen korrespondierende Einlass-Steueröffnung und mindestens eine mit den Auslass-Durchgangsöffnungen korrespondierende Auslass-Steueröffnung aufweist. Die Verteilerfläche kann z.B. einteilig mit einem angrenzenden Bereich des Ventilgrundkörpers oder von einem separaten Bauteil, wie einer Verteilerscheibe, d.h. einem scheibenförmigen Verteilerkörper, gebildet sein, der im Inneren des Ventilgrundkörpers angeordnet wird.

Dies stellt eine für viele Anwendungen vorteilhafte Konfiguration für die Fluidsteuereinheit unter Ausnutzung der an sich bekannten Maßnahme dar, als Ventilglied eine bewegliche Steuerscheibe vorzusehen. Die darauf speziell abgestimmte Gestaltung der Einlass-Durchgangsöffnungen und der Auslass-Durchgangsöffnungen in der Verteilerfläche sowie der Einlass-Steueröffnung und der Auslass-Steueröffnung in der Steuerscheibe erweist sich in funktioneller und fertigungstechnischer Hinsicht als vorteilhaft. In alternativen Ausführungen ist die Fluidsteuereinheit in anderer Weise konfiguriert, was beispielsweise Konfigurationen einschließt, bei denen zumindest einer der Einlasskanäle oder einer der Auslasskanäle nicht in der Verteilerfläche mündet, gegen welche die Steuerscheibe anliegt, sondern an anderer Stelle im Ventilgrundkörper in die Mischkammer einmündet bzw. aus dieser ausmündet. Analog kann die Steuerscheibe beispielsweise mit einer oder mehreren umfangsseitigen Aussparungen anstelle von umfangsseitig geschlossenen Durchgangsöffnungen versehen sein.

In einer Weiterbildung der Erfindung umfasst das Betätigungselement einen Betätigungshebel, der um eine Hebellängsachse drehbeweglich und um eine Hebelquerachse kippbeweglich am Ventilgrundkörper gehalten ist, wobei das Ventilglied an einen ventilinneren Endbereich des Betätigungshebels angekoppelt ist. Diese Realisierung des Betätigungselements eignet sich speziell für Ausführungen des Eingriff-Mischventils als Einhebel-Mischventil. Dies kann beispielsweise mit der Maßnahme kombiniert sein, für wenigstens einen der beiden Betätigungswege des Ventilglieds eine Drehbewegung desselben vorzusehen. In alternativen Ausführungen ist das Betätigungselement in einer anderen, an sich herkömmlichen Weise realisiert, z.B. als Drehknopf, Drucktaste oder vom Benutzer berührungsfrei ferngesteuert bedienbares Element.

Vorteilhafte Ausführungsformen der Erfindung sind in den Zeichnungen dargestellt. Diese und weitere Ausführungsformen der Erfindung werden nachfolgend näher erläutert. Dabei zeigen:
Fig. 1 eine Längsschnittansicht eines Eingriff-Mischventils mit einem Ventilgrundkörper in Kartuschenausführung,
Fig. 2 eine Draufsicht auf eine Verteilerscheibe im Ventilgrundkörper,
Fig. 3 eine Draufsicht auf eine als bewegliches Ventilglied gegen die Verteilerscheibe anlegbare Steuerscheibe,
Fig. 4 eine Draufsicht auf die Kombination von Verteilerscheibe und auf dieser aufliegender Steuerscheibe mit der Steuerscheibe in einer ersten Endstellung eines translatorischen Mengenbetätigungsweges, in der das Ventil geschlossen ist,
Fig. 5 die Draufsicht von Fig. 4 mit der Steuerscheibe in einer Rastzwischenstellung ihres Mengenbetätigungsweges,
Fig. 6 die Draufsicht von Fig. 4 mit der Steuerscheibe in einer zweiten Endstellung ihres Mengenbetätigungsweges, in der das Ventil voll geöffnet ist,
Fig. 7 die Längsschnittansicht von Fig. 1 für eine Ventilvariante mit integral eingebauten statt außenseitig abnehmbar angebrachten Mengenreglerelementen und
Fig. 8 die Längsschnittansicht von Fig. 7 für eine Ventilvariante mit nur einem Mengenreglerelement.

Wie in den Figuren anhand exemplarischer Ausführungsbeispiele veranschaulicht, umfasst das erfindungsgemäße Eingriff-Mischventil einen Ventilgrundkörper 1, der ein Ventilgehäuse 2, in dem eine Mischkammer 3 gebildet ist, mindestens einen ersten und einen zweiten Einlasskanal 4, 5 zum Zuführen eines jeweiligen Fluids in die Mischkammer 3 und mindestens einen ersten und einen zweiten Auslasskanal 6, 7 zum Abführen von in der Mischkammer 3 gebildetem Mischfluid aus der Mischkammer 3 aufweist. In sanitären Anwendungen ist das Mischfluid typischerweise temperiertes Wasser, das aus Kaltwasser und Warmwasser gemischt wird, wobei das Kaltwasser und das Warmwasser über die beiden Einlasskanäle 4, 5 getrennt in die Mischkammer 3 geleitet werden. Des Weiteren umfasst das erfindungsgemäße Eingriff-Mischventil wie gezeigt eine Fluidsteuereinheit 8, die für eine Mischfunktion und eine Mengenregulierfunktion eingerichtet ist und ein im Ventilgehäuse 1 beweglich angeordnetes Ventilglied 9 sowie ein beweglich am Ventilgrundkörper 1 angeordnetes Betätigungselement 10 zum Bewegen des Ventilglieds 9 umfasst.

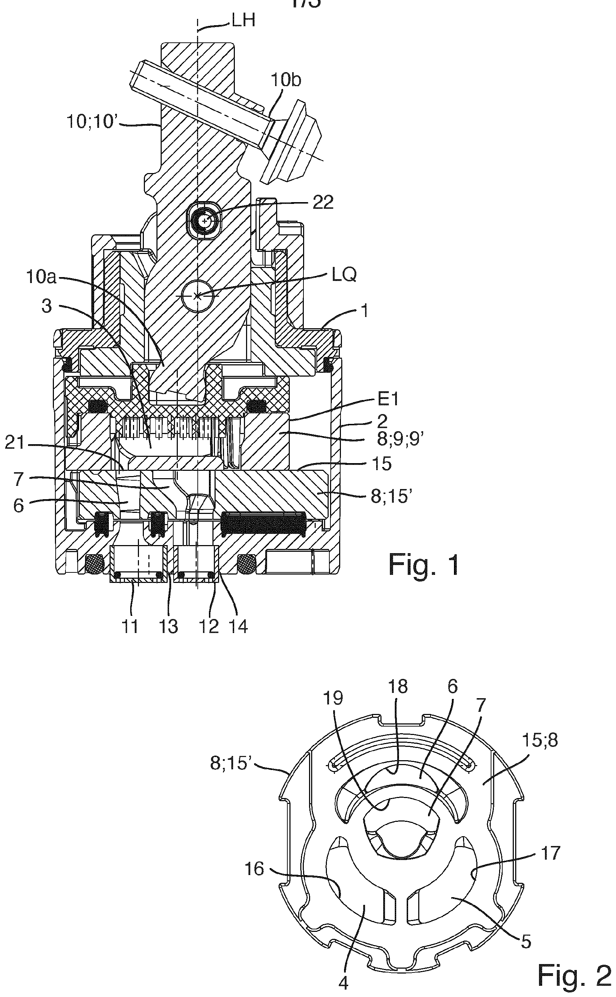

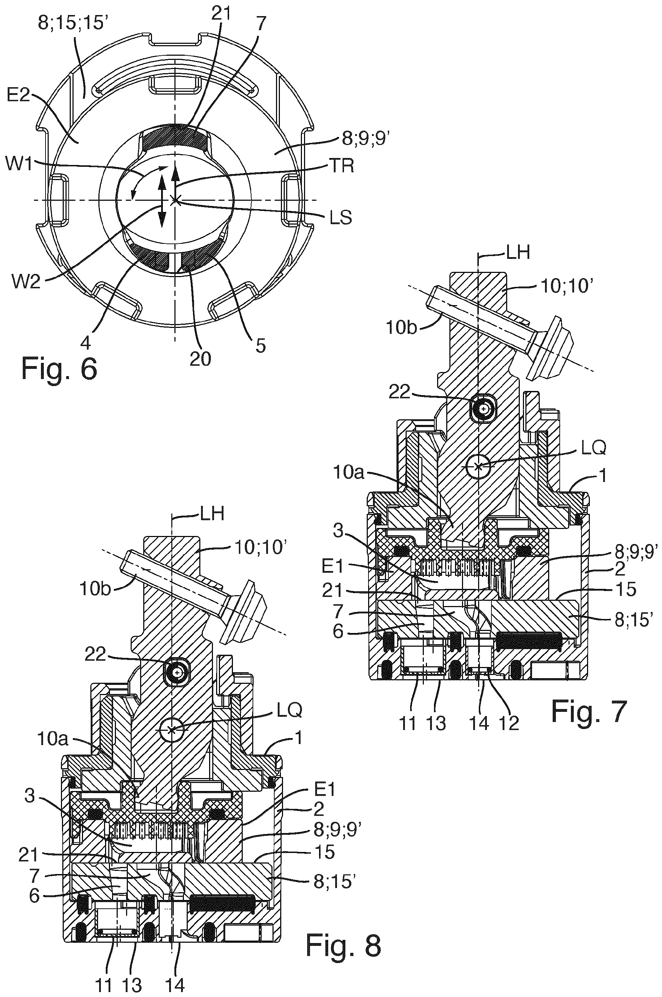

Das Ventilglied 9 ist durch das Betätigungselement 10 für die Mischfunktion längs eines Mischbetätigungswegs W1 zwischen einer ersten und einer zweiten Mischendstellung, die vorliegend nicht weiter interessieren und daher nicht gezeigt sind, bewegbar und für die Mengenregulierfunktion längs eines Mengenbetätigungswegs W2 zwischen einer ersten und einer zweiten Mengenendstellung E1, E2 bewegbar. Die Fluidsteuereinheit 8 ist dafür eingerichtet, durch Bewegen des Ventilglieds 9 längs des Mengenbetätigungswegs W2 die Menge an über den ersten Auslasskanal 6 aus der Mischkammer 3 abführbarem Mischfluid und die Menge an über den zweiten Auslasskanal 7 aus der Mischkammer 3 abführbarem Mischfluid variabel einzustellen. Speziell zeigen die Fig. 1, 4, 7 und 8 das jeweilige Mischventil mit dem Ventilglied 9 in der ersten Mengenendstellung E1, während Fig. 6 das Mischventil mit dem Ventilglied 9 in der zweiten Mengenendstellung E2 zeigt.

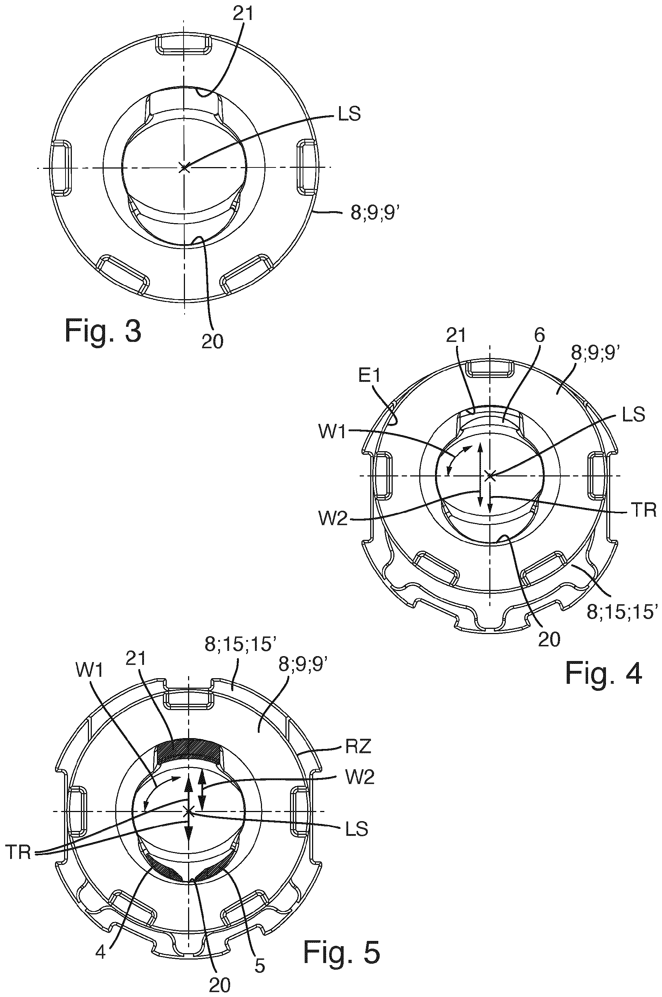

In vorteilhaften Ausführungsformen ist, wie in den gezeigten Beispielen, die erste Mengenendstellung E1 eine Minimalmengenstellung, und die zweite Mengenendstellung E2 ist eine Maximalmengenstellung. Zusätzlich weist in diesem Fall der Mengenbetätigungsweg W2 eine Rastzwischenstellung RZ zwischen der ersten und der zweiten Mengenendstellung E1, E2 auf. Fig. 5 zeigt die Fluidsteuereinheit 8 in dieser Rastzwischenstellung RZ des Ventilglieds 9. Des Weiteren ist hierzu vorgesehen, dass ein Abschnitt des Mengenbetätigungswegs W2 zwischen der Minimalmengenstellung, d.h. der ersten Mengenendstellung E1, und der Rastzwischenstellung RZ zur Änderung der Menge an über den ersten Auslasskanal 6 abführbarem Mischfluid eingerichtet ist und/oder ein Abschnitt des Mengenbetätigungswegs W2 zwischen der Rastzwischenstellung RZ und der Maximalmengenstellung, d.h. der zweiten Mengenendstellung E2, zur Änderung der Menge an über den zweiten Auslasskanal 7 abführbarem Mischfluid eingerichtet ist. In den gezeigten Ausführungsbeispielen sind beide Maßnahmen realisiert.

In vorteilhaften Ausführungsformen ist ein erstes Mengenreglerelement 11 im ersten Auslasskanal 6 und/oder ein zweites Mengenreglerelement 12 im zweiten Auslasskanal 7 angeordnet. In den Ausführungsbeispielen der Fig. 1 und 7 sind beide Mengenreglerelemente 11, 12 vorgesehen, beim Ausführungsbeispiel von Fig. 8 ist nur das erste Mengenreglerelement 11 vorgesehen. In nicht gezeigten, alternativen Ausführungen ist nur das zweite Mengenreglerelement 12 vorgesehen.

In entsprechenden Realisierungen ist das erste und/oder das zweite Mengenreglerelement 11, 12 abnehmbar am Ventilgrundkörper 1 angebracht oder als integraler Bestandteil desselben gebildet. Im Ausführungsbeispiel von Fig. 1 sind die beiden Mengenreglerelemente 11, 12 von außen abnehmbar am Ventilgrundkörper 1 angebracht, z.B. durch Einschrauben, alternativ durch lösbares Einstecken. Im Ausführungsbeispiel von Fig. 7 sind die beiden Mengenreglerelemente 11, 12 als integraler Bestandteil des Ventilgrundkörpers 1 gebildet, indem sie in dessen Inneres eingebaut sind oder alternativ einteilig mit einem angrenzenden Bereich des Ventilgrundkörpers 1 gebildet sind, so dass sie nicht von außen vom Ventilgrundkörper 1 abgenommen werden können. In gleicher Weise ist im Ausführungsbeispiel von Fig. 8 das Mengenreglerelement 11 im ersten Auslasskanal 6 in das Innere des Ventilgrundkörpers 1 eingebaut bzw. eingesetzt.

Je nach Bedarf ist vorgesehen, dass die beiden Auslasskanäle 6, 7 zu einem gemeinsamen Ventilauslass aus dem Ventilgrundkörper 1 oder getrennt zu je einem zugeordneten Ventilauslass münden. In den gezeigten Ausführungsbeispielen führen die beiden Auslasskanäle 6, 7 zu je einem zugeordneten Ventilauslass 13, 14, der in diesem Fall jeweils durch eine Ausmündung des betreffenden Auslasskanals 6, 7 aus dem Ventilgrundkörper 1 gebildet ist. Es versteht sich, dass bei Bedarf die beiden Ventilauslässe 13, 14 außerhalb des Ventilgrundkörpers 1 zu zwei getrennten Fluidverbrauchern oder alternativ zu einem gemeinsamen Fluidverbraucher geführt sein können. In nicht gezeigten Ausführungen vereinigen sich die beiden Auslasskanäle 6, 7 aus der Mischkammer 3 im Ventilgrundkörper 1 zu einem einzigen, gemeinsamen Ventilauslass.

In vorteilhaften Ausführungen sperrt das Ventilglied 9 den ersten und den zweiten Einlasskanal 4, 5 in der ersten Mengenendstellung E1, d.h. in der Minimalmengenstellung, ab und öffnet die beiden Einlasskanäle 4, 5 beim Bewegen längs des Mengenbetätigungswegs W2 bis zur zweiten Mengenendstellung E2, d.h. bis zur Maximalmengenstellung, zunehmend, wie dies anhand der Fig. 4, 5 und 6 zu erkennen ist, die das Ventilglied 9 in der ersten Mengenendstellung E1, in der Rastzwischenstellung RZ zwischen den beiden Mengenendstellungen E1, E2 bzw. in der zweiten Mengenendstellung E2 veranschaulichen. Wie aus diesen Figuren weiter zu erkennen, öffnet das Ventilglied 9 den ersten Auslasskanal 6 in einem an die erste Mengenendstellung E1 angrenzenden Abschnitt des Mengenbetätigungswegs W2 und sperrt dabei den zweiten Auslasskanal 7 ab, während es in einem an die zweite Mengenendstellung E2 angrenzenden Abschnitt des Mengenbetätigungswegs W2 den ersten Auslasskanal 6 absperrt und den zweiten Auslasskanal 7 öffnet.

In entsprechenden Realisierungen führt das Ventilglied 9 längs des Mischbetätigungswegs W1 eine Drehbewegung aus und längs des Mengenbetätigungswegs W2 eine Translationsbewegung, wie dies bei den gezeigten Ausführungsbeispielen der Fall ist.

In vorteilhaften Ausführungsformen ist das Ventilglied 9, wie in den gezeigten Ausführungsbeispielen, von einer beweglichen Steuerscheibe 9' gebildet, die um eine Scheibenlängsachse LS drehbeweglich und in einer zur Scheibenlängsachse LS senkrechten Translationsrichtung TR translationsbeweglich gegen eine Verteilerfläche 15 des Ventilgrundkörpers 1 anliegt. In vorteilhaften Realisierungen stellt in diesem Fall, wie in den gezeigten Beispielen, die Drehbewegung der Steuerscheibe 9' um ihre Scheibenlängsachse LS den Mischbetätigungsweg W1 des Ventilglieds 9 bereit, und der Mengenbetätigungsweg W2 ist durch die Translationsbewegung der Steuerscheibe 9' längs der Translationsrichtung TR gebildet.

Die Verteilerfläche 15 beinhaltet jeweils mindestens eine Einlass-Durchgangsöffnung für den ersten und den zweiten Einlasskanal 4, 5 sowie jeweils mindestens eine Auslass-Durchgangsöffnung für den ersten und den zweiten Auslasskanal 6, 7. In den gezeigten Beispielen besitzt die Verteilerfläche 15 eine Einlass-Durchgangsöffnung 16 für den ersten Einlasskanal 4, eine Einlass-Durchgangsöffnung 17 für den zweiten Einlasskanal 5, eine Auslass-Durchgangsöffnung 18 für den ersten Auslasskanal 6 und eine Auslass-Durchgangsöffnung 19 für den zweiten Auslasskanal 7, wie aus Fig. 2 ersichtlich. Die Steuerscheibe 9' beinhaltet mindestens eine mit den Einlass-Durchgangsöffnungen 16, 17 korrespondierende Einlass-Steueröffnung, in den gezeigten Beispielen eine Einlass-Steueröffnung 20, und mindestens eine mit den Auslass-Durchgangsöffnungen 18, 19 korrespondierende Auslass-Steueröffnung, in den gezeigten Beispielen eine Auslass-Steueröffnung 21, wie aus Fig. 3 ersichtlich.

In den gezeigten Ausführungsbeispielen ist die Verteilerfläche 15 von einer stromaufwärtigen, in den Figuren oberen Hauptseite einer perforierten, d.h. mit den genannten Einlass- und Auslass-Durchlassöffnungen 16 bis 19 versehenen Verteilerscheibe 15' gebildet, die stationär, d.h. unbewegt, als Teil des Ventilgrundkörpers 1 im Ventilgehäuse 2 eingebaut ist. Alternativ kann die Verteilerfläche 15 von einem andersartigen, d.h. nicht scheibenförmigen, Teil des Ventilgrundkörpers 1 gebildet sein.

In den gezeigten Ausführungsbeispielen ist das jeweilige Mengenreglerelement 11, 12 in einem austrittsseitig letzten Teil des Ventilgrundkörpers 1 bzw. des Ventilgehäuses 2 angeordnet bzw. in den Ventilgrundkörper 1 bzw. in das Ventilgehäuse integriert, d.h. stromabwärts der Verteilerscheibe 15' und direkt am entsprechenden Ventilauslass 13, 14 oder mit allenfalls geringem Abstand zu diesem. In alternativen Ausführungen ist das jeweilige Mengenreglerelement 11, 12 in die Verteilerscheibe 15' integriert, d.h. in einer zum betreffenden Auslasskanal 6, 7 gehörigen Durchlassöffnung 18, 19 in der Verteilerscheibe 15'. In anderen alternativen Ausführungen ist das jeweilige Mengenreglerelement 11, 12 in die Steuerscheibe 9' integriert, d.h. in einer zum betreffenden Auslasskanal 6, 7 gehörigen Durchlassöffnung in der Steuerscheibe 9'. In weiteren alternativen Ausführungen ist das jeweilige Mengenreglerelement 11, 12 an anderer Stelle in den Ventilgrundkörper 1 bzw. in das Ventilgehäuse 2 integriert.

In entsprechenden Ausführungen umfasst das Betätigungselement 10, wie in den gezeigten Beispielen, einen Betätigungshebel 10', der um eine Hebellängsachse LH drehbeweglich und um eine Hebelquerachse LQ kippbeweglich am Ventilgrundkörper 1 gehalten ist, wie in den Fig. 1, 7 und 8 zu erkennen. Dabei ist das Ventilglied 9 an einen ventilinneren Endbereich 10a des Betätigungshebels 10' angekoppelt. Explizit ist in den Fig. 1, 7 und 8 nur ein Hebelstutzen des Betätigungshebels 10' gezeigt. Der restliche Teil des Betätigungshebels 10' einschließlich eines als Nutzerschnittstelle fungierenden Hebelgriffteils ist in einer üblichen Weise, was daher hier keiner Erläuterungen bedarf, vorzugsweise lösbar am Hebelstutzen angebracht, in den Fig. 1, 7 und 8 durch eine Verbindungsschraube 10b angedeutet.

In entsprechenden Ausführungen ist die Rastzwischenstellung RZ, wie in den gezeigten Beispielen, durch eine ausrastbare Rastung 22 zwischen dem Betätigungselement 10, hier dem Betätigungshebel 10', und einem angrenzenden Bereich des Ventilgrundkörpers 1 realisiert. Derartige Rastungen sind, wie schon oben erwähnt, an sich bekannt, was daher hier keiner weiteren Erläuterungen bedarf.

Für die gezeigten Ausführungsbeispiele ergibt sich aufgrund der erläuterten Konstruktion des Ventils folgende Funktionsweise für das Eingriff- bzw. Einhebel-Mischventil. Die Fig. 1, 7 und 8 zeigen das Ventil in der ersten Mengenendstellung E1, bei der es sich in diesem Fall um die Geschlossenstellung des Ventils handelt. Zwar ist in dieser Stellung, die für das Ventilglied 9 und die Verteilerfläche 15 auch in Fig. 4 gezeigt ist, der erste Auslasskanal 6 durch das Ventilglied 9 freigegeben, jedoch wird auch über den ersten Auslasskanal 6 kein Mischfluid abgegeben, da die beiden Einlasskanäle 4, 5 vom Ventilglied 9, d.h. hier der Steuerscheibe 9', abgesperrt sind. Durch Verkippen des Betätigungshebels 10' um die Hebelquerachse LQ kann der Benutzer das Ventil sukzessive öffnen, indem diese Kippbewegung die Transversalbewegung des Ventilglieds 9 bzw. der Steuerscheibe 9' längs der Translationsrichtung TR bewirkt, die in diesem Fall den Mengenbetätigungsweg W2 darstellt, wie in den Fig. 4 bis 6 durch einen zugehörigen Doppelpfeil repräsentiert. Dabei gibt die Steuerscheibe 9' sukzessive die beiden Einlasskanäle 4, 5 frei, wobei sie zunächst den zweiten Auslasskanal 7 noch geschlossen hält und nur den ersten Auslasskanal 6 freigibt. Somit lässt sich in diesem an die Geschlossenstellung angrenzenden Bewegungsabschnitt durch die Steuerscheibe 9' und damit die Fluidsteuereinheit 8 die Menge an über den ersten Auslasskanal 6 abgegebenem Mischfluid sukzessive und feinfühlig erhöhen, während der zweite Auslasskanal 7 noch abgesperrt bleibt.

Erst wenn durch die weitere Betätigung der Steuerscheibe 9' längs des Mengenbetätigungswegs W2 der zweite Auslasskanal 7 freigegeben wird, kann das Mischfluid in den zweiten Auslasskanal 7 gelangen. In den gezeigten Beispielen ist dies der Fall, wenn der Benutzer die Rastzwischenstellung RZ überfahren hat, d.h. wenn er die Steuerscheibe 9' ausgehend von der Rastzwischenstellung RZ in Fig. 5 weiter längs des Mengenbetätigungswegs W2 in Richtung zweiter Mengenendstellung E2 verschiebt. Fig. 6 zeigt dann die der Geschlossenstellung gegenüberliegende zweite Mengenendstellung E2 für die Steuerscheibe 9', in der sich das Ventil in der maximal geöffneten Stellung befindet. Dazu sind, wie aus Fig. 6 zu erkennen, die beiden Einlasskanäle 4, 5 maximal geöffnet. Zudem gibt die Steuerscheibe 9' den zweiten Auslasskanal 7 nun maximal frei. Somit wird in dieser Ventilstellung das Mischfluid in maximal möglicher Menge über den zweiten Auslasskanal 7 abgegeben.

Je nach konkreter Ausführung des Ventils und insbesondere der Fluidsteuereinheit 8 kann die Abgabe des Mischfluids über den ersten Auslasskanal 6 nach vorheriger maximaler Freigabe des ersten Auslasskanals 6 wieder sukzessive reduziert werden, bis hin zu einer vollständigen Absperrung des ersten Auslasskanals 6. In den gezeigten Ausführungsbeispielen bleibt der erste Auslasskanal 6 von der Steuerscheibe 9' abgesperrt, solange sich diese in der Nähe der zweiten Mengenendstellung E2 befindet.

Bei entsprechender Auslegung des Ventils kann die Rastzwischenstellung RZ dafür genutzt werden, dem Benutzer eine haptische Rückmeldung darüber zu bieten, dass bei Bewegung der Steuerscheibe 9' von der ersten Mengenendstellung E1 zur zweiten Mengenendstellung E2 im Bereich der Rastzwischenstellung RZ ein Übergang von der vorherigen Mischfluidabgabe nur über den ersten Auslasskanal 6 zu einer Mischfluidabgabe nur über den zweiten Auslasskanal 7 erfolgt. Der Übergang kann je nach Bedarf so gestaltet sein, dass über einen gewissen Betätigungsbereich der Steuerscheibe 9' hinweg das Mischfluid über beide Auslasskanäle 6, 7 abgeführt wird, oder alternativ so, dass ein sprungartiger Wechsel zwischen der Mischfluidabgabe nur über den ersten Auslasskanal 6 und nur über den zweiten Auslasskanal 7 stattfindet.

Somit lässt sich bei der gezeigten Ventilkonstruktion durch den Benutzer, indem er das Betätigungselement 10 und damit das Ventilglied 9 bzw. die Steuerscheibe 9' längs des Mengenbetätigungswegs W2 bewegt, ausgehend von der Geschlossenstellung des Ventils als einer Endstellung das Mischfluid zunächst in sukzessiv zunehmender Menge einzig am ersten Auslasskanal 6 bereitstellen, anschließend in sukzessiv zunehmender Menge am zweiten Auslasskanal 7 bei gleichzeitiger oder vorheriger Reduktion der Abgabemenge am ersten Auslasskanal 6 und schließlich in zunehmender und erhöhter Menge einzig am zweiten Auslasskanal 7. Dabei stellt vorteilhaft auch die maximal offene Ventilstellung, d.h. die Maximalmengenstellung, eine Endstellung des Mengenbetätigungswegs W2 dar, speziell die der Minimalmengenstellung bzw. ersten Mengenendstellung E1 entgegengesetzte zweite Mengenendstellung E2.

Zusätzlich lässt sich die am jeweiligen Auslasskanal 6,7 tatsächlich abgegebene Mischfluidmenge durch das oder die Mengenreglerelemente 11, 12 im ersten bzw. zweiten Auslasskanal 6, 7 in einer gewünschten Weise beeinflussen, wenn und soweit diese wie bei den gezeigten Beispielen vorhanden sind.

Die Mischfunktion des erfindungsgemäßen Eingriff-Mischventils entspricht der Mischfunktion, wie sie bei verwandten herkömmlichen Eingriff-Mischventilen grundsätzlich bekannt ist, was daher hier keiner näheren Erläuterungen bedarf. Speziell kann hierzu der Benutzer in den gezeigten Ausführungsbeispielen das Betätigungselement 10, konkret den Betätigungshebel 10', um die Hebellängsachse LH verdrehen, wodurch das Ventilglied 9 bzw. die Steuerscheibe 9' eine entsprechende Drehbewegung um die Scheibenlängsachse LS ausführt. Das hat zur Folge, dass die Steuerscheibe 9' gegensinnig jeweils den einen der beiden Einlasskanäle 4, 5 zunehmend öffnet und den anderen zunehmend schließt, wodurch das Mischungsverhältnis der beiden das Mischfluid ergebenden Fluide, wie beispielsweise Kaltwasser und Warmwasser, verändert wird. Für diesen Zweck sind die Einlass-Durchgangsöffnungen 16, 17 der Verteilerfläche 15 und die korrespondierende Einlass-Steueröffnung 20 der Steuerscheibe 9' geeignet gestaltet. Die Gestaltung der Auslass-Durchgangsöffnungen 18, 19 der Verteilerfläche 15 und der Auslass-Steueröffnung 21 der Steuerscheibe 9' ist so gewählt, dass das Verdrehen der Steuerscheibe 9', d.h. deren Bewegung längs des Mischbetätigungswegs W1, keine signifikante Auswirkung auf die Mischfluidmenge hat, die über den ersten und/oder den zweiten Auslasskanal 6, 7 gemäß der Stellung der Steuerscheibe 9' längs des Mengenbetätigungswegs W2 abgegeben werden soll.

Wie die gezeigten und die weiteren oben erläuterten Ausführungsbeispiele deutlich machen, stellt die Erfindung ein Eingriff-Mischventil zur Verfügung, das durch seinen konstruktiven Aufbau Vorteile im Hinblick auf seine Ventilfunktionalitäten und spezieller im Hinblick auf seine Fähigkeit bietet, auch geringere Mischfluidmengen genau und feinfühlig über einen oder mehrere Ventilauslässe abgeben zu können. Dies wird mit einem relativ einfachen Aufbau des Ventils erreicht, was den Herstellungsaufwand niedrig hält. Die spezielle Auslegung der Fluidsteuereinheit und das oder die Mengenreglerelemente tragen je für sich und in Kombination in entsprechenden Ausführungen zu diesen vorteilhaften Ventilfunktionalitäten bei. Es versteht sich, dass das erfindungsgemäße Ventil sowohl in sanitären als auch in nicht-sanitären Anwendungen als Einhebel-Mischventil oder anderweitiges Eingriff-Mischventil vorteilhaft verwendet werden kann.

## Patentansprüche

1. Eingriff-Mischventil, insbesondere sanitäres Einhebel-Mischventil, mit
- einem Ventilgrundkörper (1), der ein Ventilgehäuse (2), in dem eine Mischkammer (3) gebildet ist, mindestens einen ersten und einen zweiten Einlasskanal (4, 5) zum Zuführen eines jeweiligen Fluids in die Mischkammer (3) und mindestens einen ersten und einen zweiten Auslasskanal (6, 7) zum Abführen von in der Mischkammer (3) gebildetem Mischfluid aus der Mischkammer (3) aufweist, und
- einer Fluidsteuereinheit (8), die für eine Mischfunktion und eine Mengenregulierfunktion eingerichtet ist und ein im Ventilgehäuse (2) beweglich angeordnetes Ventilglied (9) sowie ein beweglich am Ventilgrundkörper (1) angeordnetes Betätigungselement (10) zum Bewegen des Ventilglieds (9) umfasst,
- wobei das Ventilglied (9) durch das Betätigungselement (10) für die Mischfunktion längs eines Mischbetätigungsweges (W1) zwischen einer ersten und einer zweiten Mischendstellung bewegbar ist und für die Mengenregulierfunktion längs eines Mengenbetätigungsweges (W2) zwischen einer ersten und einer zweiten Mengenendstellung (E1, E2) bewegbar ist und
- wobei die Fluidsteuereinheit (8) dafür eingerichtet ist, durch Bewegen des Ventilglieds (9) längs des Mengenbetätigungsweges (W2) die Menge an über den ersten Auslasskanal (6) aus der Mischkammer (3) abführbarem Mischfluid und die Menge an über den zweiten Auslasskanal (7) aus der Mischkammer (3) abführbarem Mischfluid variabel einzustellen,
**dadurch gekennzeichnet, dass**
- die erste Mengenendstellung (E1) eine Minimalmengenstellung ist und die zweite Mengenendstellung (E2) eine Maximalmengenstellung ist und der Mengenbetätigungsweg (W2) eine Rastzwischenstellung (RZ) zwischen der ersten und der zweiten Mengenendstellung (E1, E2) aufweist, wobei ein Abschnitt des Mengenbetätigungsweges (W2) zwischen der Minimalmengenstellung und der Rastzwischenstellung (RZ) zur Änderung der Menge an über den ersten Auslasskanal (6) abführbarem Mischfluid eingerichtet ist und/oder ein Abschnitt des Mengenbetätigungsweges (W2) zwischen der Rastzwischenstellung (RZ) und der Maximalmengenstellung zur Änderung der Menge an über den zweiten Auslasskanal (7) abführbarem Mischfluid eingerichtet ist, und/oder
- ein erstes Mengenreglerelement (11) im ersten Auslasskanal (6) und/oder ein zweites Mengenreglerelement (12) im zweiten Auslasskanal (7) angeordnet ist.

2. Eingriff-Mischventil nach Anspruch 1, weiter **dadurch gekennzeichnet, dass**
- das erste Mengenreglerelement (11) abnehmbar am Ventilgrundkörper (1) angebracht ist oder einen integralen Bestandteil des Ventilgrundkörpers (1) bildet und/oder
- das zweite Mengenreglerelement (12) abnehmbar am Ventilgrundkörper (1) angebracht ist oder einen integralen Bestandteil des Ventilgrundkörpers (1) bildet.

3. Eingriff-Mischventil nach Anspruch 1 oder 2, weiter **dadurch gekennzeichnet, dass** der erste und der zweite Auslasskanal (6, 7) zu einem gemeinsamen Ventilauslass aus dem Ventilgrundkörper (1) münden oder getrennt zu je einem zugeordneten Ventilauslass (13, 14) führen.

4. Eingriff-Mischventil nach einem der Ansprüche 1 bis 3, weiter **dadurch gekennzeichnet, dass** das Ventilglied (9) den ersten und den zweiten Einlasskanal (4, 5) in der Minimalmengenstellung absperrt und beim Bewegen längs des Mengenbetätigungsweges (W2) bis zur Maximalmengenstellung zunehmend öffnet, wobei es in einem an die Minimalmengenstellung angrenzenden Abschnitt des Mengenbetätigungsweges (W2) den ersten Auslasskanal (6) öffnet und den zweiten Auslasskanal (7) absperrt und in einem an die Maximalmengenstellung angrenzenden Abschnitt des Mengenbetätigungsweges (W2) den ersten Auslasskanal (6) absperrt und den zweiten Auslasskanal (7) öffnet.

5. Eingriff-Mischventil nach einem der Ansprüche 1 bis 4, weiter **dadurch gekennzeichnet, dass** das Ventilglied (9) längs des Mischbetätigungsweges (W1) eine Drehbewegung ausführt und längs des Mengenbetätigungsweges (W2) eine Translationsbewegung ausführt.

6. Eingriff-Mischventil nach einem der Ansprüche 1 bis 5, weiter **dadurch gekennzeichnet, dass** das Ventilglied (9) von einer beweglichen Steuerscheibe (9') gebildet ist, die um eine Scheibenlängsachse (LS) drehbeweglich und in einer zur Scheibenlängsachse (LS) senkrechten Translationsrichtung (TR) translationsbeweglich gegen eine Verteilerfläche (15) des Ventilgrundkörpers (1) anliegt, wobei die Verteilerfläche (15) jeweils mindestens eine Einlass-Durchgangsöffnung (16, 17) für den ersten und den zweiten Einlasskanal (4, 5) sowie jeweils mindestens eine Auslass-Durchgangsöffnung (18, 19) für den ersten und den zweiten Auslasskanal (6, 7) aufweist und die Steuerscheibe (9') mindestens eine mit den Einlass-Durchgangsöffnungen (16, 17) korrespondierende Einlass-Steueröffnung (20) und mindestens eine mit den Auslass-Durchgangsöffnungen (18, 19) korrespondierende Auslass-Steueröffnung (21) aufweist.

7. Eingriff-Mischventil nach einem der Ansprüche 1 bis 6, weiter **dadurch gekennzeichnet, dass** das Betätigungselement (10) einen Betätigungshebel (10') umfasst, der um eine Hebellängsachse (LH) drehbeweglich und um eine Hebelquerachse (LQ) kippbeweglich am Ventilgrundkörper (1) gehalten ist, wobei das Ventilglied (9) an einen ventilinneren Endbereich (10a) des Betätigungshebels (10') angekoppelt ist.
